# EUROPEAN PATENT APPLICATION

(11) **EP 2 783 983 A1**
(43) Date of publication of application: **01.10.2014**
(21) Application number: 13161803.5
(22) Date of filing: 28.03.2013
(51) Int. Cl.: B64D 11/06

(54) **Passenger module for a seating array for an aircraft cabin**

(71) Applicant: Etihad Airways, Abu Dhabi (AE)
(72) Inventor: Lawson, Nigel, Kent TN14 6DA (GB); Harcup, Anthony, Surrey GU2 4B (GB); Dryburgh, Ian, Hampshire SO21 2NS (GB)
(74) Representative: Sharman, Thomas Alexander

(57) **Abstract**

A passenger module for a seating array for an aircraft cabin comprises: a pair of end walls generally extending in a first direction connected by at least one side wall generally extending in a second direction which is substantially orthogonal to the first direction, at least one of the walls defining an entrance to the module; at least one door assembly moveable from a stowed position in which the entrance is unobstructed by the door assembly to a deployed position in which the entrance is at least partially obstructed by the door assembly; an ottoman; and a seat assembly orientated in the second direction so as to face the ottoman. The ottoman is spaced from the seat in the second direction and the ottoman is wider in the first direction than the seat.

## Description

This invention relates to a passenger module for a seating array for an aircraft cabin, a pair of passenger modules and a seating array comprising a plurality of passenger modules. The invention is particularly suitable for a Business or First Class aircraft cabin.

Seating arrays for an aircraft cabin which comprise a plurality of individual or "private" passenger compartments are generally known. It is known, for example that each compartment may be formed by a series of walls and accessible via a doorway in one of the walls provided with a door assembly for opening and closing the doorway. It is also known that each compartment may include a seat for a passenger and an ottoman.

There is a general need, particularly in relation to Business and First Class cabins, for a novel seating arrangement to attract custom, to maximise the number of seats meeting certain design requirements which can be installed within the space available space in an aircraft cabin and to increase the space available in each suite for a passenger.

The invention seeks to provide a novel seating array in which individual passenger modules including seats are arranged in such a way as to maximise the number of passenger modules which can occupy the available space in an aircraft cabin and to increase the space available in each suite for a passenger.

In the following description, the terms "longitudinal" and "longitudinally" are used to mean extending along the length direction of an aircraft cabin on or parallel to a longitudinal centreline of an aircraft cabin and the terms "transverse" and "transversely" are used to mean extending across an aircraft cabin from one side of the aircraft cabin to the other in a direction which is generally orthogonal to a longitudinal centreline of the aircraft cabin.

The invention provides a passenger module for a seating array for an aircraft cabin, the module comprising: a pair of end walls generally extending in a first direction connected by at least one side wall generally extending in a second direction which is substantially orthogonal to the first direction, at least one of the walls defining an entrance to the module; at least one door assembly moveable from a stowed position in which the entrance is unobstructed by the door assembly to a deployed position in which the entrance is at least partially obstructed by the door assembly; an ottoman; and a seat assembly orientated in the second direction so as to face the ottoman; wherein the ottoman is spaced from the seat in the second direction and the ottoman is wider in the first direction than the seat.

The combination of features of the invention provides a novel seating array in which individual passenger modules including seats are arranged in such a way as to maximise the number of passenger modules which can occupy the available space in an aircraft cabin. The invention enables an aircraft to be fitted with a seating array which includes two full-length, transversely orientated beds of about 82 inches in length positioned across the aircraft cabin.

Some preferred features of the present invention are provided in the dependent claims and discussed below.

Preferably, the ottoman extends in the first direction substantially across an entire width of the module.

Preferably, the ottoman is convertible between an upright configuration for supporting a passenger in a seated position to a substantially lie-flat configuration for supporting a passenger in a laying down position.

Preferably, the passenger module further comprises a module aisle extending in the first direction, the seat assembly being positioned on one side of the module aisle and the ottoman being positioned on the other side of the module aisle. Preferably, when converted to the substantially lie-flat configuration, the ottoman is positioned closer to the seat assembly at least partially occupies the transversely extending module aisle.

Preferably, the ottoman is convertible between the upright configuration and the lie-flat configuration entirely independently of the seat assembly. Preferably, in the substantially lie-flat configuration of the ottoman, the sleeping surface is formed solely by the ottoman. Preferably, when the ottoman is converted to the substantially lie-flat configuration, the ottoman is supported entirely independent of the seat assembly. These features ensure that seat remains usable by a passenger when the ottoman is converted to form a sleeping surface. It also reduces the amount of time and effort required to form the sleeping surface and no significant movement of the seat is required.

Preferably, at least one of the sidewalls is configured so that the seat assembly of a first passenger module at least partially overlaps in the second direction with the seat assembly of a second passenger module. This reduces the overall longitudinal dimension of the seats of a pair of longitudinally adjacent modules making more efficient use of the available space.

Preferably, at least one of the sidewalls is shaped so that the seat assembly of a first passenger module at least partially overlaps in the first direction with a seat assembly of a second passenger module. This reduces the overall transverse dimension of the seats of a pair of transversely adjacent modules making more efficient use of the available space.

Preferably, the respective seat assemblies of the first and second passenger modules are orientated in the second direction so that they face away from each other in the second direction.

Preferably, at least one of the sidewalls is shaped so that the seat assembly of a first passenger module is positioned substantially adjacent to the seat of a second passenger module in the first direction. This further reduces the overall longitudinal dimension of the seats of a pair of longitudinally adjacent modules making more efficient use of the available space.

Preferably, at least one of the sidewalls is formed from a first and second wall portions extending in the first direction and positioned behind the respective seat assemblies of adjacent first and second passenger modules, the wall portions connected by a third wall portion, the third wall portion dividing the respective seat assemblies of the first and second modules. At least one of the sidewalls may have an elongate 's' or 'z' shape or 'z' shaped. This provides added privacy for passengers in the adjacent modules whilst making efficient use of the available space.

Preferably, at least one of the sidewalls includes a movable screen portion, the movable screen portion being moveable between an extended position in which the screen divides the passenger module from an adjacent passenger module in the second direction and a retracted position in which the adjacent passenger modules are at least partially open along a side. More preferably, the moveable screen portion is slidable between the extended position and the retracted position. More preferably, the moveable screen portion is slidable relative to and inside a fixed portion of the sidewall. These features provide means for passengers travelling together and sitting in adjacent suites to form a double module along at least part of the length of the modules to enable them to interact during flight.

Preferably, the passenger module further comprises a vanity unit. This allows the passengers access to personal hygiene facilities within their own module.

The invention further provides a pair of passenger modules, each module according to any of the preceding claims, wherein at least one sidewall of each of the passenger modules is common to the each module of the pair of modules, the common sidewall including a movable screen portion moveable between an extended position in which the screen divides the pair of modules and a retracted position in which the passenger modules are open along at least a portion of the common sidewall. This enables passengers travelling together and sitting in adjacent suites to form a double module along at least part of the length of the modules to form a partial length double bed/sleeping surface.

Preferably, the screen is moveable to the retracted position and the respective ottomans of the modules are convertible to the substantially lie-flat configuration so as to form at least a partial double sleeping surface. This enables passengers travelling together and sitting in adjacent suites to form a partial length double sleeping surface along at least part of the length of the modules to enable them to interact during flight.

The pair of adjacent passenger modules may be formed as a single, integral, module assembly. Alternatively they may be individual separate suites positioned adjacent one another.

The invention further provides a seating array comprising a plurality of passenger modules according to any of the preceding claims.

Preferably, the seating array comprises two columns of passenger modules, each column including at least two modules and each module according to any of the preceding claims, wherein the modules in each column are arranged so the respective seat assemblies of the modules are orientated in the second direction, wherein the columns extend in the second direction and are divided by a single central aisle which extends in the second direction.

Preferably, the respective seat assemblies of each pair of adjacent passenger modules in the second direction in each column are orientated so that they face away from each other in the second direction.

One or more preferred embodiments of the present invention will now be described with reference to the accompanying drawings, in which:
Figure 1 is a plan view of a seating array according to the present invention;
Figure 2 is a plan view of the seating array of Figure 1 including aircraft passengers in various positions within the seating array which includes a fore and aft 'nested' seating arrangement;
Figure 3 is a perspective view of the seating array of Figure 1 from a point above the rear of the seating layout showing the relative position of the seat within an aircraft cabin;
Figure 4 is a further perspective view of the seating array of Figure 1 from an elevated position at the front of the cabin;
Figure 5 is a further view of the seating array of Figure 1 showing the single central aisle of the cabin bordered on each side by a series of individual passenger modules;
Figure 6 is a view of an individual passenger module showing the position of the seat within the module;
Figure 7 is a side view of the module of Figure 6 showing the position of the sliding privacy doors or screens in the stowed position;
Figure 8 is a further view of the module of Figure 6 showing the seat in an upright or TTOL position;
Figure 9 is a further view of the module of Figure 6 showing the seat in a reclined or relaxed "position";
Figure 10 is a plan view of an adjacent pair of individual passenger modules along the length of one of the column of seats in which the ottoman of the module on the left hand side of the figure is in a normal or vertical position and the ottoman of the module on the right hand side of the figure has been converted into a sleeping surface for a passenger;
Figure 11 is a view from the side of the pair of adjacent passenger modules of Figure 10;
Figure 12 is front or rear view of a dividing wall which divides two adjacent passenger modules along the column which includes a sliding privacy screen when in the normal or deployed position;
Figure 13 is a further view of the dividing wall of Figure 12 in which the sliding privacy screen has been retracted;
Figure 14 is a perspective view of the ottoman of a passenger module and a dividing screen between two adjacent seats in which the ottoman has been converted to a sleeping surface and the sliding priority screen remains in the deployed position;
Figure 15 is a further perspective view of the ottoman and dividing wall of Figure 14 in which the sliding privacy screen has been retracted and the ottomans on each side of the dividing wall have been deployed to form a sleeping surface;
Figure 16 is a further perspective view of an ottoman and dividing wall between two adjacent modules with the screen in the retracted position and the ottomans converted to sleeping surfaces;
Figure 17 is a modified view of the ottoman and dividing wall of Figure 16 in which the flat panel monitor has been deployed from the dividing wall so that it is substantially parallel to the single central cabin aisle;
Figure 18 is a view of an individual passenger module in which the doors of a vanity unit within the passenger module have been opened; and
Figure 19 is a further view of an individual passenger module in which the vanity unit doors have been opened.

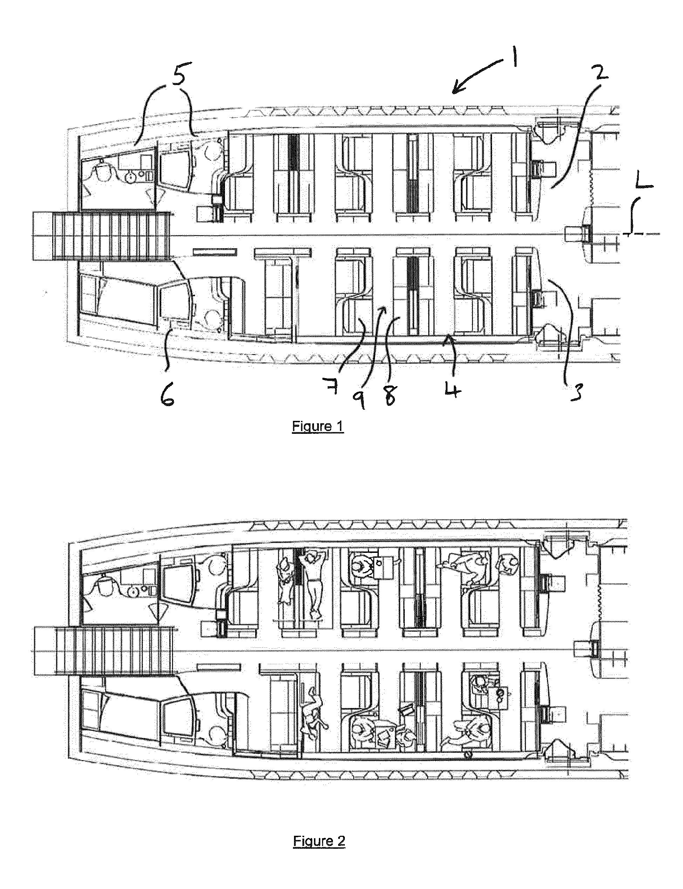

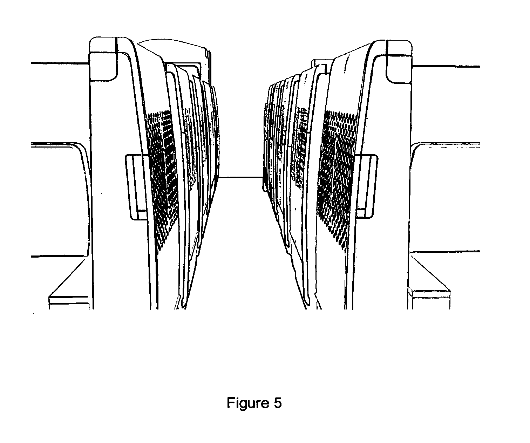

Figure 1 to 5 show a seating array 1 for an aircraft comprising two columns 2,3 of individual passenger modules 4 or suites extending a longitudinal direction along the cabin and divided by a single, central, longitudinally extending aisle extending along a longitudinal centreline of the cabin L. The columns of seats are therefore positioned in the spaces defined between the central aisle and the sidewalls of the aircraft. The column of seats at the top of Figure 1 includes five individual passenger modules and the column at the bottom of Figure 1 includes four individual passenger modules.

The space on an aircraft at the front of the column of modules at the top of the Figure 1 (the front being at the left hand end of Figure 1) may be occupied by a pair of washroom units 5 including a combination of some or all of a toilet, sink and shower. The space at the front of the column of seats at the bottom of Figure 1 may be occupied by a VIP module 6 having a lounge area including seats for one or more passengers, a separate bathroom including a toilet, sink and shower and a separate bedroom including a double bed. The VIP module is arranged to make most efficient use of the available space at the front of the aircraft cabin, the double bed being positioned at the front of the cabin where reduced headroom is available and the lounge and bathroom being positioned towards the rear of the VIP module where greater headroom is available. At the front of the central aisle, between the VIP module and the washroom units, a set of stairs may be provided to permit access to an upper or lower deck, as required. The space at the rear of the cabin (at the right hand end of Figure 1) may be occupied by emergency exits, cabin crew seating and a kitchen area.

As shown in Figures 1 to 5, each of the individual passenger modules includes a forward or rearward facing seat assembly 7 including a seat back, seat cushion and armrests, and a transversely orientated ottoman 8. The seat is positioned within each module so that it faces the ottoman, the ottoman provides a footrest for a passenger sitting in the seat. The seat is laterally offset from the centre of the module so that it faces one end of the ottoman. A walkway or aisle 9 extends transversely to the cabin centreline and separates the seat from the ottoman to enable a passenger to enter the module and access the seat and ottoman. Each of the individual passenger modules in the columns of modules is intended to accommodate one passenger during taxi, take-off and landing. The ottoman may provide temporary seating for one or more additional passengers during flight.

The passenger modules are arranged so that in each adjacent pair of modules along each column, the seat assemblies face in opposite directions, the seat in a first module facing towards the front of the aircraft and the seat in a longitudinally adjacent module facing toward the rear of the aircraft.

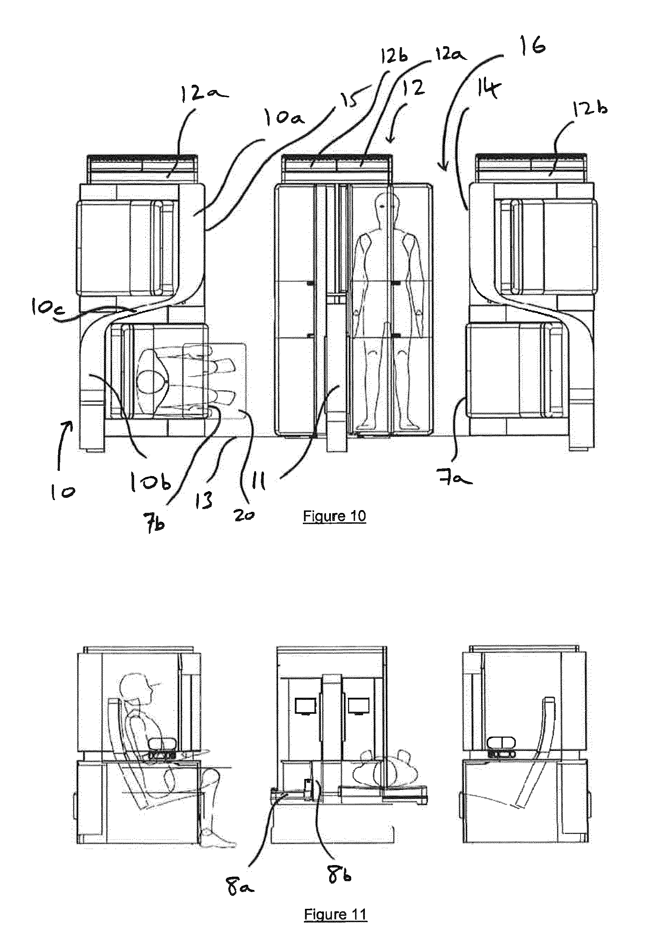

With reference to Figures 10 and 11, each module is defined by and separated from the longitudinally adjacent modules by a pair of end walls 10,11 connected by a pair of side walls 12,13. At one end of each passenger module, a transversely extending end wall 11 extends from the aircraft sidewall towards the aisle and separates each module from a longitudinally adjacent module. At the other end of each passenger module, an end wall 10 being a generally elongate "s" or "z"-shaped end wall separates each module from a longitudinally adjacent module. One sidewall 13 of each module is formed by the sidewall of the aircraft. An opposite sidewall 12 of each module adjacent the aisle is formed by one or more furniture units as discussed further below.

The "s"-shaped or "z"-shaped end wall 10 enables a forward facing seat assembly 7 of one passenger module and a rearward facing seat assembly of a longitudinally adjacent passenger module to be positioned substantially adjacent one another in a transverse direction. The s-shaped end wall includes a pair of transversely extending end wall portions 10a, 10b positioned behind the seat backs of the transversely adjacent seats and a central, angled, end wall portion 10c connecting each of the transverse wall portions.

The seats are positioned within their respective modules so that the edge 7a of the seat cushion of a first, forward facing, seat 7 is substantially in line with the front face 14 of the transversely extending wall portion positioned behind a second, transversely adjacent, rearward facing, seat and so that the edge 7b of the seat cushion of the second seat is substantially in line with the rear surface 15 of the transversely extending wall portion positioned behind the first seat. The first and second seats are therefore nested or interlocked so that the overall longitudinal dimension from an edge of the seat cushion of the first seat to an edge of the seat cushion of the second seat is substantially less than the combined longitudinal dimension of the individual seat cushions of the first and second seats.

In each of the passenger modules the transversely orientated ottoman 8 extends across the full width of the passenger module from the sidewall adjacent to or formed by the aircraft sidewall to the sidewall adjacent the aisle. The ottoman has an ottoman seat cushion 8a and an ottoman back cushion 8b. The ottoman is convertible within the module from an upright or sitting position to a substantially flat position in which the ottoman seat cushion and an ottoman back cushion are adjacent one another in a longitudinal direction and combine to form a lie-flat sleeping surface. In the stowed position, the ottoman comprises of both generally horizontal and generally vertical cushions, that once deployed by the passenger provides a substantially horizontal sleeping position to form a sleeping surface for a passenger. As shown in Figure 2, when the ottoman is converted to form the sleeping surface, the ottoman seat cushion occupies most, but not all, of the transverse aisle. Alternatively, the ottoman seat cushion may abut the seat cushion to that the ottoman occupies all of the space provided for the transverse access aisle.

A preferred mechanism for the ottoman (not shown) allows the ottoman to slide on sliding rails or tracks towards the seat into the space provided for the transverse aisle. Initially, the ottoman slides towards the passenger while the ottoman remains in an upright configuration. As the ottoman continuers to slides towards the seat, the ottoman back cushion is gradually rotated until it flattens out and is positioned adjacent to the ottoman seat cushion in a longitudinal direction. The ottoman seat cushion and back cushion may include pins or rollers arranged to slide along rails or within channels in the side walls of the module to guide the ottoman back cushion from a substantially vertical position to a horizontal position. The sliding rails may include a feature to lock the ottoman in an upright, intermediate and/or lie flat position. The ottoman is preferably electrically operated using a passenger interface controllable by the passenger or a member of flight crew.

The side wall 12 of each of the passenger modules which borders the aisle is formed by one or more furniture units 12a, 12b. A first portion of the sidewall of each module adjacent the aisle side of the ottoman 12b defines a wardrobe space accessible via a hinged door. The wardrobe includes a sliding hanging rail deployable from a stowed position within the wardrobe to a deployed position in which the hanging rail extends from the wardrobe space into the transverse aisle. A second portion of the sidewall 12a adjacent the aisle side of the seat may include a storage unit for storing items to be accessible by a passenger, for example magazines and in-flight entertainment materials.

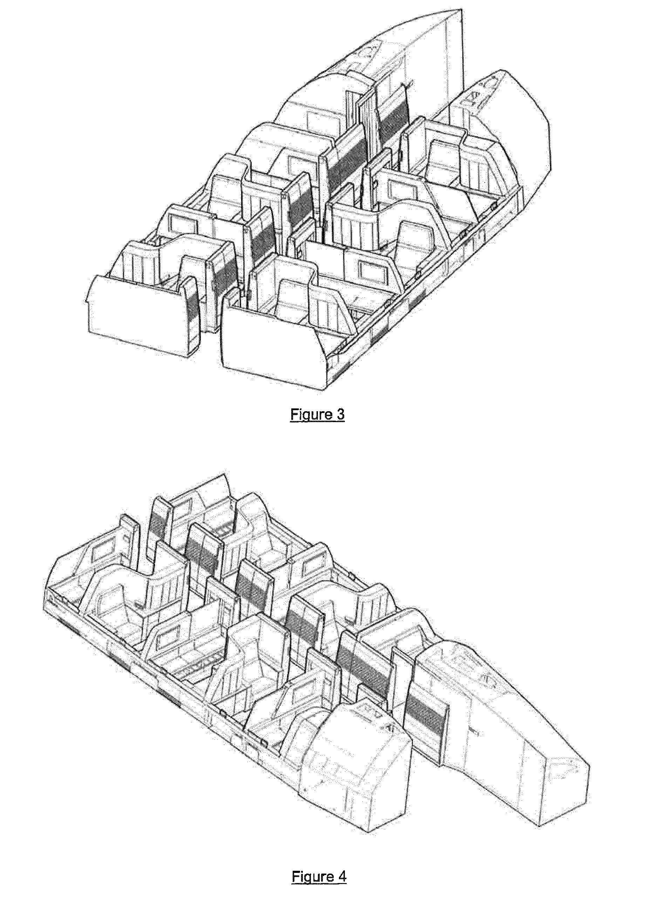

With reference to Figures 3 to 7, an aperture 16 between the first and second sidewall portions 12a,12b defines a doorway to permit access to the module. Each module is provided with a pair of door assemblies 17,18. Each of the door assemblies is preferably provided with a pattern of holes or fretwork 19 which improves the aesthetic appeal of the passenger modules whilst enabling a member of flight crew to view a passenger within each passenger module when the door assemblies are closed.

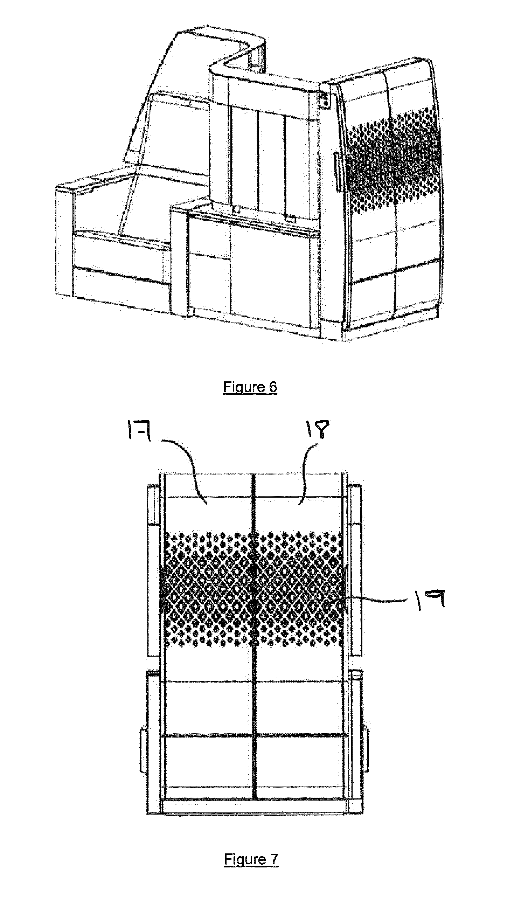

The door assemblies are slidably supported by the furniture units defining the first and second sidewall portions. The door assemblies are slideable relative to the furniture units from a stowed position (Figures 3, 4) in which the doorway is substantially unobstructed by the door assemblies to a deployed position (Figure 7) in which the doorway is at least partially obstructed by each door assembly, the door assemblies abutting one another in the centre of the doorway so as to obstruct the doorway and provide increased privacy for a passenger occupying the passenger module. The door assemblies include a latch to enable the doors to be latched in the stowed position during taxi, take off and landing.

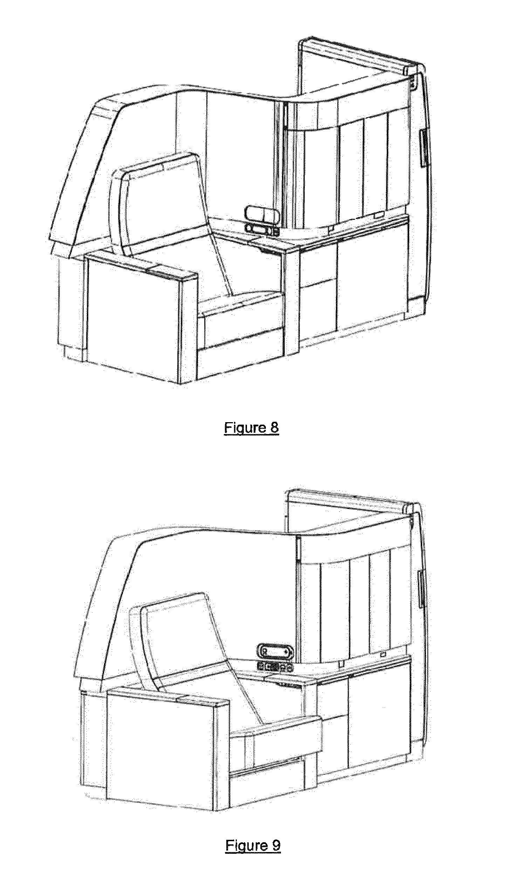

As shown in Figures 8 and 9, the seat in each of the modules is convertible from an upright or taxi, take off and landing (TTOL) position to a reclined or relaxed "position" during the flight. During movement from the TTOL position to the relaxed position, the seat cushion slides forwards and the front edge of the seat cushion is raised and the seat back slides downwardly. The mechanism for controlling movement of the seat does not form part of the present invention and will not therefore be described in detail. A control panel is provided to enable a module occupant to convert the seat from the TTOL to the relaxed position.

Each module further includes a folding table assembly 20 moveable between a folded and stowed position in which it may be hidden from sight to a unfolded deployed position for use by a passenger sitting in the seat.

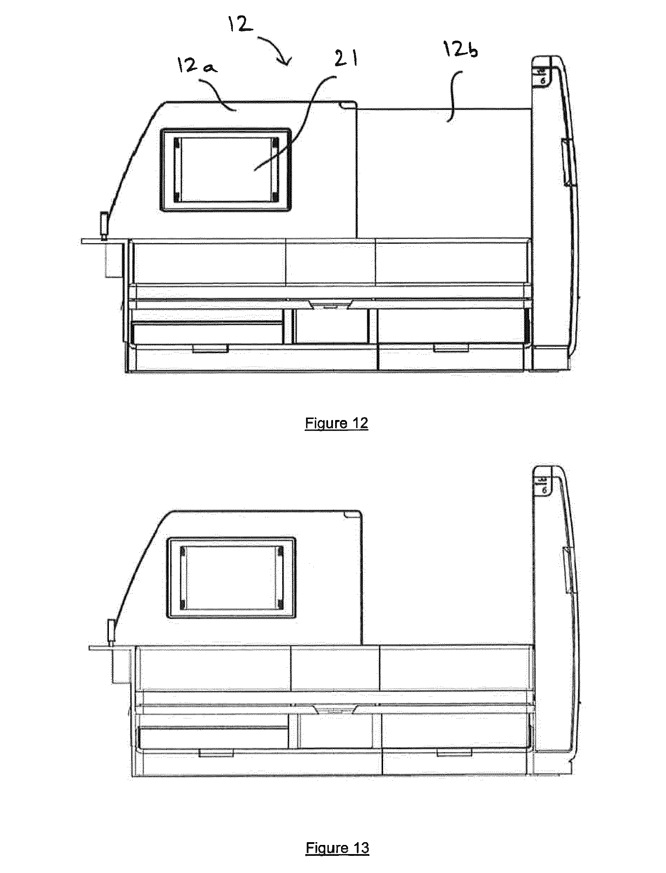

As shown in Figures 12 and 13, the transversely extending end wall 11 dividing the ottomans of two longitudinally adjacent passenger modules comprises a fixed portion 11a and a moveable portion 12b. The fixed portion is provided with a recess on each side, the recess forming a housing for a flat panel monitor 21 facing the seat in the modules on opposite sides of the end wall. The moveable end wall portion 12b faces an opposite end of the full-width ottoman and forms a sliding privacy screen.

The privacy screen is slidable relative to and inside the fixed portion of the dividing end wall into the space between the flat panel monitors from a deployed or extended position (Figure 12) in which it divides the longitudinally adjacent modules to a stowed or retracted position (Figure 13) in which the adjacent passenger modules are opened to enable passenger interaction. The screen is manually operated and may include a latch for holding the screen in the extended and/or retracted position. The screen may be provided with rollers or wheels slidable along a rail or within a track.

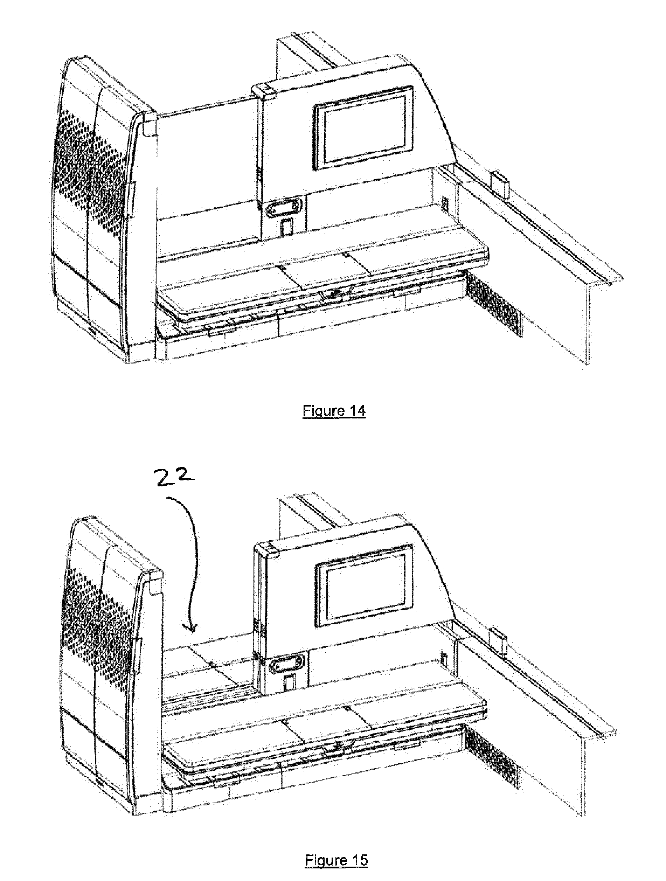

As shown in Figure 14, when the sliding priority screen is in the extended position, the ottomans 8 of adjacent passenger modules may be converted to form sleeping surfaces for the passengers in each module, the sleeping surfaces being separated by the fixed 12a and moveable 12b portions of the end wall. When two passengers in adjacent modules are travelling together, the sliding privacy screen 12b may be retracted during flight so that the sleeping surfaces of two adjacent passenger modules form a partial length double sleeping surface 22 at the head/torso end. The seating array shown in Figure 1 includes six individual passenger modules which can be converted as described to form three pairs of double modules.

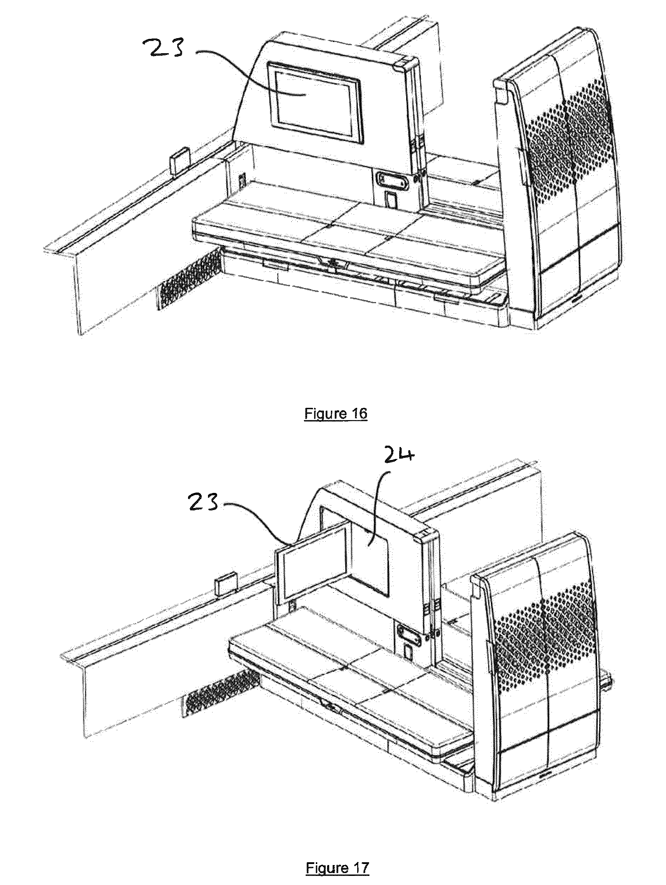

As shown in Figures 16 and 17, the flat panel monitor 23 in each passenger module is rotatable from a transversely orientated position in which the flat panel monitor is housed within the recess 24 in the fixed portion of the end wall and faces the seat to a longitudinally orientated position during flight in which the monitor is positioned above a passenger's feet and a passenger lying on the sleeping surface. The flat panel monitors of two adjacent passenger modules may be simultaneously deployed to the longitudinal position so that passengers lying on the partial double length bed formed by the ottomans of adjacent modules can both view their respective flat panel monitors more easily.

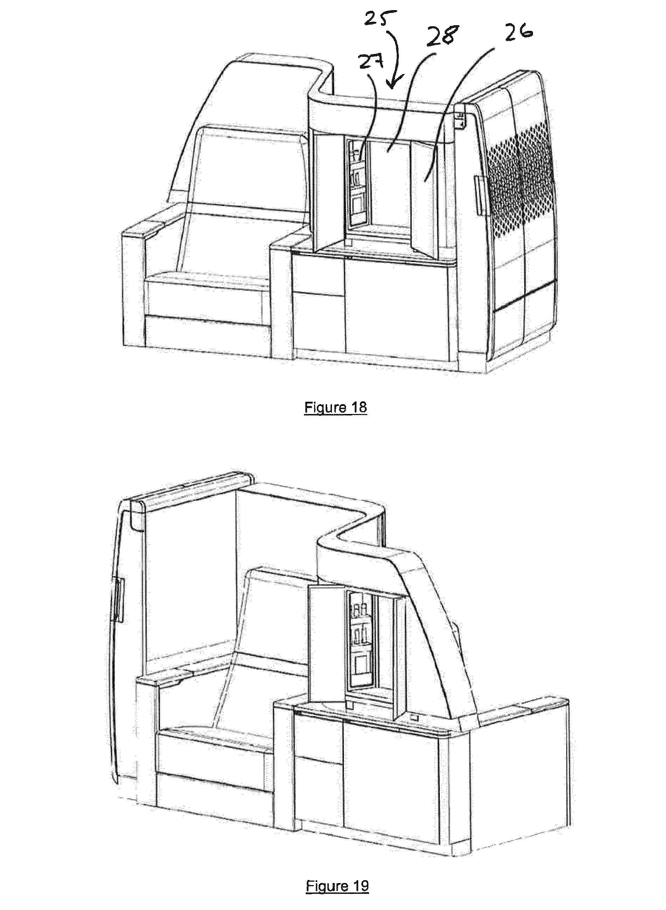

As shown in Figures 18 and 19, each of the individual passenger modules is provided with a vanity unit 25 positioned adjacent the seat. The vanity unit includes a pair of hinged doors 26 providing access to a shelving unit for containing personal hygiene products and accessories and a mirror. It may also include a wash basin.

Each of the modules may also provided with a refrigerated mini-bar drinks compartment beneath the vanity unit.

## Claims

1. A passenger module for a seating array for an aircraft cabin, the module comprising:-
a pair of end walls generally extending in a first direction connected by at least one side wall generally extending in a second direction which is substantially orthogonal to the first direction, at least one of the walls defining an entrance to the module;
at least one door assembly moveable from a stowed position in which the entrance is unobstructed by the door assembly to a deployed position in which the entrance is at least partially obstructed by the door assembly;
an ottoman; and
a seat assembly orientated in the second direction so as to face the ottoman;
wherein the ottoman is spaced from the seat in the second direction and the ottoman is wider in the first direction than the seat.

2. A passenger module according to claim 1, wherein the ottoman extends in the first direction substantially across an entire width of the module.

3. A passenger module according to claim 1 or 2, wherein the ottoman is convertible between an upright configuration for supporting a passenger in a seated position to a substantially lie-flat configuration for supporting a passenger in a laying down position.

4. A passenger module according to any of claims 1 to 3, wherein the passenger module further comprises a module aisle extending in the first direction, the seat assembly being positioned on one side of the module aisle and the ottoman being positioned on the other side of the module aisle.

5. A passenger module according to claim 3 or 4, arranged so that in the substantially lie-flat configuration, the ottoman is positioned closer to the seat assembly and at least partially occupies the transversely extending module aisle.

6. A passenger module according to any of claims 3 to 5, wherein the ottoman is convertible between the upright configuration and the lie-flat configuration entirely independently of the seat assembly.

7. A passenger module according to any of claims 3 to 6, wherein in the substantially lie-flat configuration of the ottoman, the sleeping surface is formed solely by the ottoman.

8. A passenger module according to any of the preceding claims, wherein at least one of the sidewalls is configured so that the seat assembly of a first passenger module at least partially overlaps in the second direction with the seat assembly of a second passenger module.

9. A passenger module according to any of the preceding claims, wherein at least one of the sidewalls is shaped so that the seat assembly of a first passenger module at least partially overlaps in the first direction with a seat assembly of a second passenger module.

10. A passenger module according to claim 8 or 9, wherein the respective seat assemblies of the first and second passenger modules are orientated in the second direction so that they face away from each other in the second direction.

11. A passenger module according to any of claims 8 to 10, wherein at least one of the sidewalls is shaped so that the seat assembly of a first passenger module is positioned substantially adjacent to the seat of a second passenger module in the first direction.

12. A passenger module according to any of claims 8 to 11, wherein at least one of the sidewalls is formed from a first and second wall portions extending in the first direction and positioned behind the respective seat assemblies of adjacent first and second passenger modules, the wall portions connected by a third wall portion, the third wall portion dividing the respective seat assemblies of the first and second modules.

13. A passenger module according to any of the preceding claims, wherein at least one of the sidewalls includes a movable screen portion, the movable screen portion being moveable between an extended position in which the screen divides the passenger module from an adjacent passenger module in the second direction and a retracted position in which the adjacent passenger modules are at least partially open along a side.

14. A seating array comprising a plurality of passenger modules according to any of the preceding claims.

15. A seating array comprising two columns of passenger modules, each column including at least two modules and each module according to any of the preceding claims, wherein the modules in each column are arranged so the respective seat assemblies of the modules are orientated in the second direction, wherein the columns extend in the second direction and are divided by a single central aisle which extends in the second direction.
